Europäisches Patentamt

European Patent Office

Office européen des brevets

(19)

(11) Publication number: **0 046 065**
**B1**

(12) **EUROPEAN PATENT SPECIFICATION**

(45) Date of publication of patent specification: **27.12.85**

(51) Int. Cl.⁴: **B 60 L 15/04**

(21) Application number: **81303605.0**

(22) Date of filing: **06.08.81**

(54) **Electrical power supply having a variable output.**

(30) Priority: **06.08.80 AU 4902/80**
**06.08.80 AU 4903/80**
**14.04.81 AU 8488/81**

(43) Date of publication of application:
**17.02.82 Bulletin 82/07**

(45) Publication of the grant of the patent:
**27.12.85 Bulletin 85/52**

(84) Designated Contracting States:
**DE FR GB IT NL SE**

(56) References cited:
**FR-A-2 403 711**
**GB-A-1 051 588**
**US-A-3 354 260**
**US-A-3 387 194**
**US-A-3 809 978**
**US-A-4 052 647**
**US-A-4 158 158**

(73) Proprietor: **Jackson, Terry Roy**
**20 Sudbury Way**
**City Beach Western Australia (AU)**

(72) Inventor: **Jackson, Terry Roy**
**20 Sudbury Way**
**City Beach Western Australia (AU)**

(74) Representative: **MATTHEWS HADDAN & CO**
**Haddan House 33 Elmfield Road**
**Bromley, Kent BR1 1SU (GB)**

Courier Press, Leamington Spa, England.

## Description

This invention relates to an electrical power supply having a variable output and a means of controlling the power supply.

Such arrangements are disclosed in GB Patent No. 1,051,588 and US Patent No. 4,052,647 for example.

In one form of electrical power supply having an output of variable E.M.F., the power supply comprises at least two pairs of sources of E.M.F., the sources of each pair being interconnected in parallel, each portion of the parallel circuit comprising the source being connected in series with a diode means, a switch interconnecting the junctions between the source and the diode means of each portion of the parallel circuit and wherein the pairs are connected in parallel with each other and each portion of the parallel circuit comprises a diode means connected in series with each pair, the opposite poles of each pair being interconnected by a second switch, the switches being operated by a control means sensitive to the requirements of the load connected to the power supply and being adapted to operate said switches such that on said first or second switches being open said sources or pairs of sources respectively are connected in parallel and on said first or second switches being closed said sources or pairs of sources respectively are connected in series.

The invention is characterised in that said control means comprises a memory having a memory state corresponding to each output level of E.M.F. of said power supply wherein at least one of said memory states corresponds to a plurality of switching arrangements for said switches, each of said switching arrangements being able to produce a substantially equal E.M.F., said control means further comprising a clock circuit connected to said memory for cyclically switching each switching arrangement within the said memory state.

This cycling for time sharing purposes ensures statistically equal usage of each source of E.M.F.

According to a preferred form the switches and diode means are mounted to a base comprising a laminate sheet formed of a central sheet of electrical insulating material and having bonded to each face a sheet of heavy duty electrically conductive material wherein each sheet of electrically conductive material is inherently load supportive, and each electrical conductive sheet is formed with a discontinuous pattern which exposes the central sheet; said switches and diode means being fixed to said base such that one of said conductive sheets is connected to one of the terminals of said components and the other is connected to the other terminal of the components and wherein the nature of the pattern on each sheet and the interconnection between the terminals and the components corresponds to the desired electrical interconnection between said diodes, switches and sources for said electrical power supply, the mounting of said switches and diodes also providing the electrical connection to the base.

According to a preferred feature of the invention the control means is capable of overriding a manual control for said E.M.F. and said control means comprising; a sensor to sense the magnitude of current from said source to said load; and a switching means connected to said sensor and to said load, wherein on said current exceeding a predetermined value, the controller switch will lower the E.M.F. of said source to a level which will produce a current below said predetermined level, said switching means subsequently permitting said E.M.F. to increase to that set by the resultant manual control provided the current does not exceed said predetermined value.

The invention will be more fully understood in the light of the following description of specific embodiments. The description is made with reference to the accompanying drawings of which:

FIGURE 1 is a schematic circuit diagram of power supply having a two step voltage output;

FIGURE 2 is a schematic circuit diagram of a power supply having a four step voltages output;

FIGURE 3 is a schematic circuit diagram of a power supply having an eight step voltage output;

FIGURE 4 is a block circuit diagram of one form of control means suitable for use with the power supply of Figure 3;

FIGURE 5 is a specific example of a circuit meeting the requirements of the circuit of Figure 4;

FIGURE 6 is a specific example of an interface circuit between the memory of the circuit of Figure 5 and the switches;

FIGURE 7 is an example of an accelerator control for use with the Figure 3 arrangement;

FIGURE 8 is a block circuit diagram of another form of control means suitable for use with the power supply of Figure 3;

FIGURE 9 is a schematic part sectional elevation of a mounting for the circuit components; and

FIGURES 10 and 11 are two other forms of control means suitable for use with the Figure 3 arrangement.

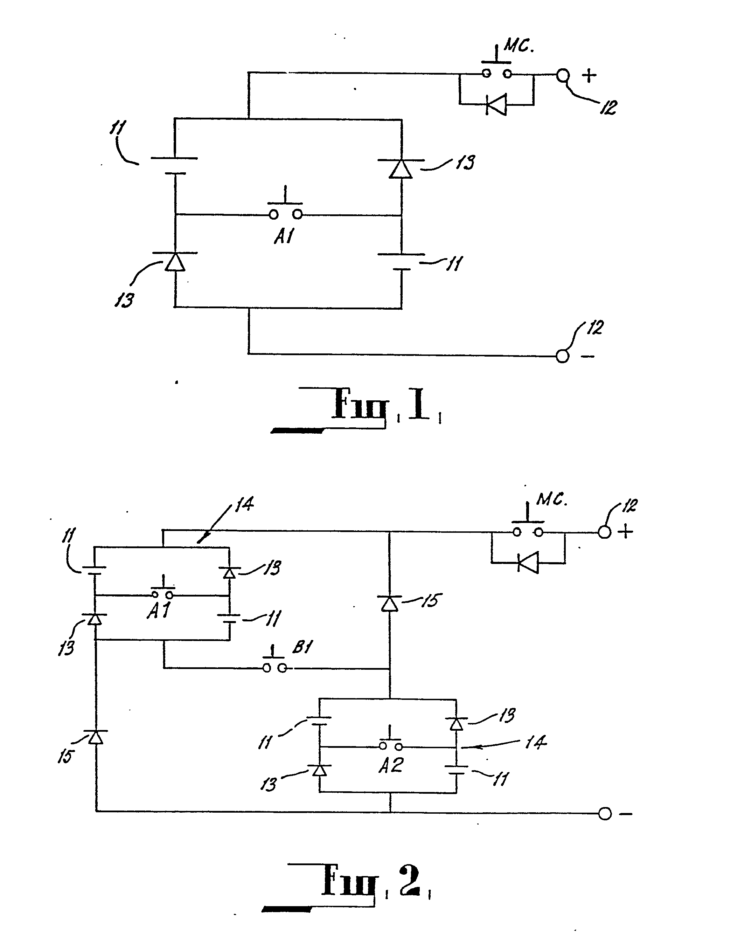

The power supply as shown at Figure 1 comprises a two step circuit which is capable of providing a voltage output of 6 volts or 12 volts. The circuit comprises a pair of 6 volt cells 11 which are connected in parallel and at each side of the parallel circuits are provided with output poles 12. Within each parallel loop of the parallel circuit a diode 13 is connected in series with each cell 11 and a switch A1 interconnects junctions of each cell 11 and its respective diode 13. The circuit also includes a master switch MC connected between the power supply and load. Table 1 below sets out the switching arrangements for the circuit.

TABLE 1

| Step | 1 | 2 |
|------|---|---|
| Switch | 6v | 12v |
| A1 | X | 0 |
| MC | 0 | 0 |

In the above table and subsequent tables, the reference X refers to an open switch and 0 refers to a closed switch.

When the switch A1 is open both cells 11 are in parallel with each other and the resultant voltage output at the poles 12 is approximately 6 volts. Upon closing switch A1, the cells 11 are connected in series with each other through the switch and the resultant voltage output at the poles 12 volts. It will be noted that the circuit is not broken when a voltage change is made.

When the cells are connected in parallel there is a small voltage drop over the diodes 13 which are connected in series with each cell 11. On the closing of the switch A1 the cells 11 are interconnected in series and are in direct interconnection with the load while the diodes 13 are also interconnected in series but are parallel with the cells 11. As a result when the cells are connected in series there is no voltage drop and the full voltage is applied to the load.

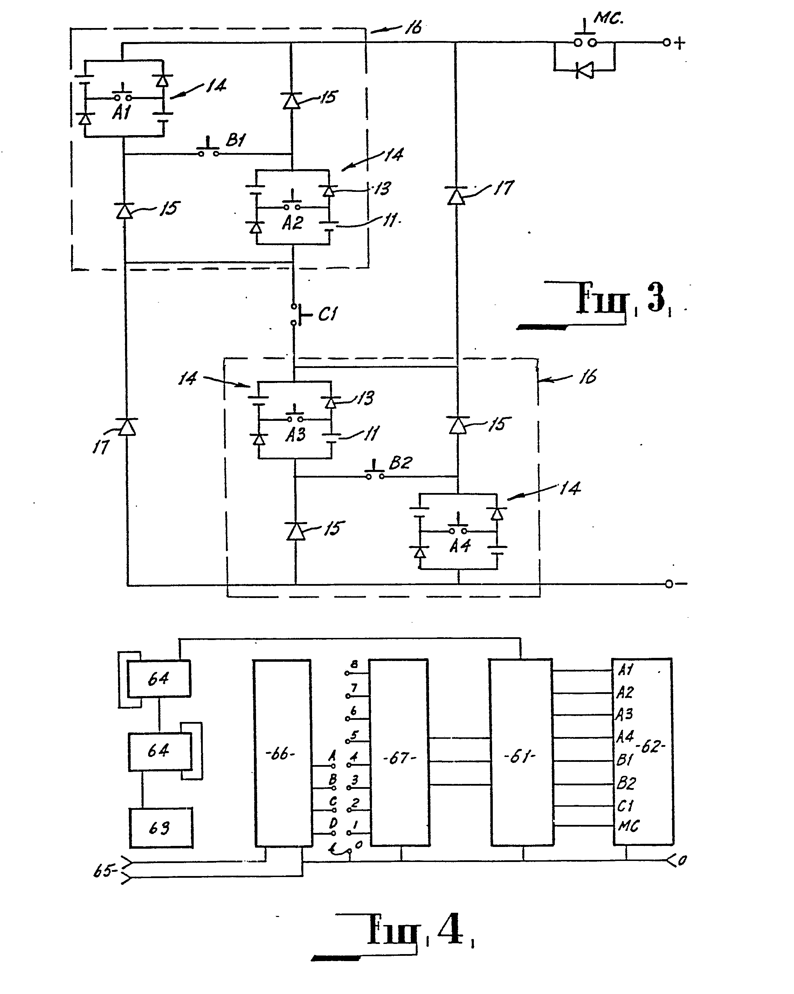

The second power supply (Figure 2) comprises a duplication of the first arrangement wherein two pairs of cells 11 of the first arrangement are interconnected themselves in parallel. Each loop of the parallel network incorporates a diode 15 connected in series with the pair of cells 14 and a second switch B1 interconnects the junction between the diode 15 and each pair of cells 14. The switches are of the normally closed type. For convenience the switches for each pair of cells 14 have been labelled A1, A1 and B1 respectively. The preferred various switching patterns available for switches A1, A2 and B1 to produce the different voltage outputs are set out in Table 2. Where a switching pattern (e.g.; 12 V) results in equal utilisation of the cells it is not necessary to utilise any other switching pattern. It only becomes necessary to consider alternative switching patterns where the available patterns result in unequal utilisation of the cells. Another important criterion in choosing a preferred pattern lies in the number of normally closed switches which must be maintained open.

TABLE 2

| Step | 1 | 2 | 3 | 4 |
|------|---|---|---|---|
| Switch | 6v | 12v | 18v | 24v |
| A1 | X | 0 | 0 X | 0 |
| A2 | X | 0 | X 0 | 0 |
| B1 | X | X | 0 0 | 0 |
| MC | 0 | 0 | 0 0 | 0 |

When each of the switches A1, B1 and A2 are open each of the cells 11 within each pair 14 are in parallel with each other and each pair of cells 14 are also in parallel with each other and as a result, the resultant output of the circuit is 6 volts. When switches A1 and A2 are closed the cells 11 in each pair 14 are interconnected in series with each other and each pair of cells 14 are connected in parallel with each other and as a result the output at the poles 12 is 12 volts. When either switch A1 or A2 is closed together with switch B1 the cells 11 associated with the closed switch are connected in series while the cells 11 associated with the open switch are connected in parallel, however, by virtue of the closing of switch B1 the pairs of cells 14 are interconnected in series therefor, the resultant output at the poles is 18 volts. Time sharing switching is necessary at level 3 to achieve equal cell utilisation. On all of the switches being closed the cells within each pair of cells 14 are connected in series while each pair of cells 14 are also connected in series and therefore the resultant output of the circuit is 24 volts.

A small voltage drop will occur when any cell or pair of cells are connected in parallel due to the presence of a diode in series with the appropriate cell or pair of cells. The maximum voltage drop will be the sum of voltage drops across the diodes 13 and 15 and this will only exist when all switches A1, A2 and B1 are open.

The power supply as shown at Figure 3 comprises a duplication of the arrangement of Figure 2 wherein two sets 16 of the two pairs of cells 14 are interconnected in parallel and each loop of the parallel circuit comprises a diode 17 connected in series with the respective set of cells 16 and the junctions between the diode 17 and the sets of cells 16 are interconnected by a switch C1. The switches are of the normally closed type. The preferred various switching patterns which are possible in order to produce the various voltage outputs are set out in Table 3. Where a switching pattern (e.g.; 12 V) results in equal utilisation of the cells, it is not necessary to utilise alternative switching patterns. It only becomes necessary to consider alternative switching patterns where the available pattern result in unequal utilisation of the cells. In choosing any switching pattern it is desirable to choose that pattern involving the least number of open switches, which require power to remain open and involve the least voltage drop across series connected diodes.

TABLE 3

| Step | 1 | 2 | 3 | 4 | 5 | 6 | 7 | 8 |
|---|---|---|---|---|---|---|---|---|
| Switch | 6v | 12v | 18v | 24v | 30v | 36v | 42v | 48v |
| A1 | X | 0 | 0 X | 0 | 0 X X X | 0 0 | X 0 0 0 | 0 |
| A2 | X | 0 | X 0 | 0 | X 0 X X | 0 0 | 0 X 0 0 | 0 |
| A3 | X | 0 | 0 X | 0 | X X 0 X | 0 0 | 0 0 X 0 | 0 |
| A4 | X | 0 | X 0 | 0 | X X X 0 | 0 0 | 0 0 0 X | 0 |
| B1 | X | X | 0 0 | 0 | 0 0 0 0 | X 0 | 0 0 0 0 | 0 |
| B2 | X | X | 0 0 | 0 | 0 0 0 0 | 0 X | 0 0 0 0 | 0 |
| C1 | X | X | X X | X | 0 0 0 0 | 0 0 | 0 0 0 0 | 0 |
| MC | 0 | 0 | 0 0 | 0 | 0 0 0 0 | 0 0 | 0 0 0 0 | 0 |

By a selection of switches as shown in the Table 3, it is possible to obtain any one of eight different voltage levels varying from 6 volts to 48 volts in 6 volt increments. A time sharing switch is desirable at levels 3, 5, 6 and 7 in order that a statistically equal usage is made of each cell.

The power supply of Figure 3 is intended for use in an electrically powered vehicle and each of the steps 1 to 8 is available to the driver via an accelerator pedal lever or like means.

A small voltage drop will occur when any cell or pair of cells or groups of cells is connected in parallel due to the presence of a diode in series with the appropriate cell, and/or pair of cells and/ or group of cells. The maximum voltage drop will be the sum of the voltage drops across the diodes 13, 15 and 17 and this will only take place when all the switches are open.

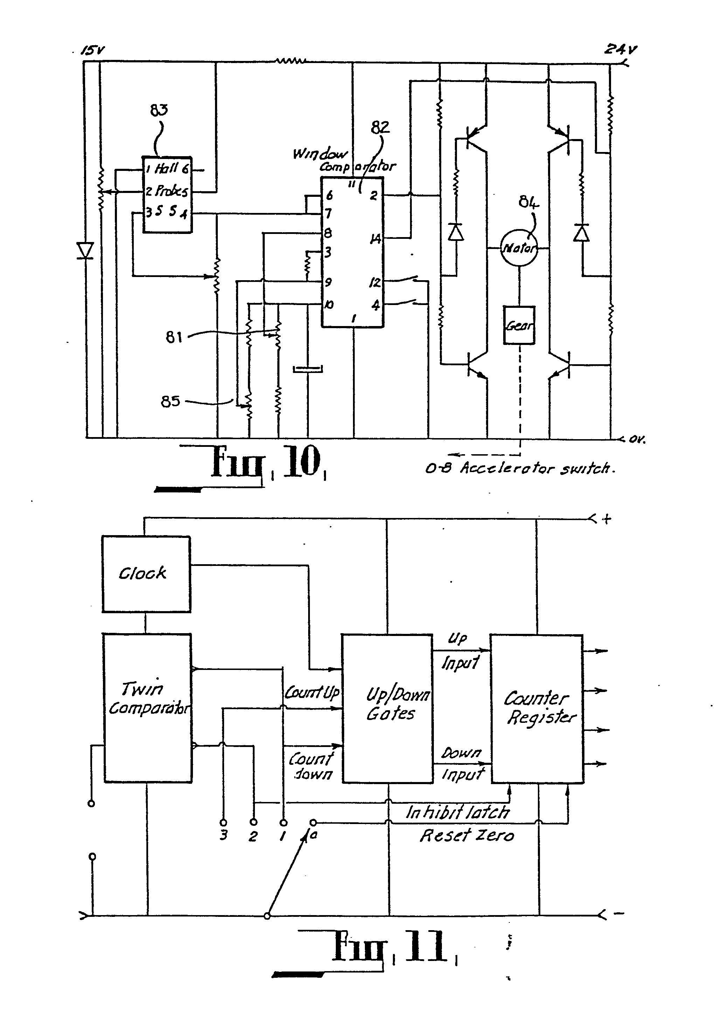

By further duplication of the circuits shown in Figure 1, 2 and 3, it is possible to gain any desired number of voltage possibilities having incremental variations of six volts. Each of the circuit components (other than the cells) of the power supply circuits described above is mounted to a base, a form of which is shown schematically at Figure 9.

The base is capable of; physically supporting all of the components; providing the desired electrical connection between the components; and providing an adequate heat sink for dissipating excessive heat produced at one or more of the required components. The components involved with the circuits referred to in each of the above embodiments include diodes and solenoid operated switches. To support each of these components, the base is formed as a laminate sheet having a central sheet 51 formed of glass reinforced plastic or like electrical insulating material which has its own inherent structural strength and which has bonded to each face a sheet of metal such as copper or like electrically conductive material wherein said sheet is of a sufficient thickness to provide additional support to the central sheet. Each sheet 52 and 53 is milled out in a discontinuous pattern to provide the maximum area of metal and to provide the necessary circuitary interconnection between the electrical terminals of the components to be mounted to the base. Holes are provided at the desired locations through the sheet to support each of the electrical components and provide the electrical connection for the terminals thereof. The diameters of the holes vary depending upon the polarity of the terminals to be accommodated. In the case of the base shown in the drawing, the negative terminals of the component are of a smaller diameter and utilise smaller diameter holes than the positive terminals of the components. Each component 54 is then fixed into place by locating the terminals of the components into the appropriate holes formed in the base. The terminals of each component pass through the base and are located into place using threaded nuts, screws or like means. Where a terminal passes through the base, the sheet of metal 52 and 53 which has the opposite polarity to that of the terminal is milled out to provide a washer-like connection point which is isolated from the remainder of the sheet.

As a result, a base is provided which has the necessary structural strength to support the massive electronic components to be carried on it and serve as an adequate heat sink for the components thereon. In addition, the use of the base simplifies the assembly of a complicated electrical circuit.

If desired, the face of the base remote from the components may be overlaid by a further sheet of glass reinforced plastic or like electrical insulating material which may then have a low current conductive film formed on it in a desired discontinuous pattern to provide connections to the solenoids and provide voltage and current checkpoint for the circuit. This low current circuit may also be used to incorporate micro-electronic compponents which are required in association with the electrical circuit referred to above to control the operation of the circuit as discussed below.

The power supply circuit of Figure 3 is associated with a manual control (i.e.; accelerator) for providing an output according to the needs of the user and a control means for preventing excessive currents being drawn by misuse of the manual control and equalising use of each cell.

As discussed in relation to the power supply of Figure 3 number of cases a particular value of e.m.f. may be obtained from a number of different switching states.

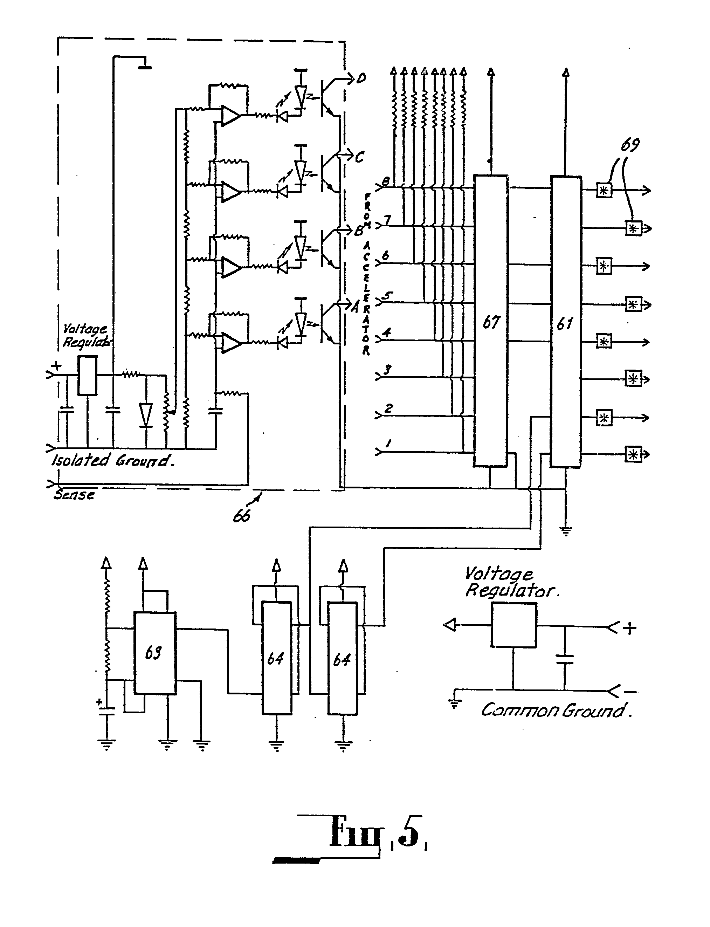

One form of control means is shown at Figure 4. The control means of Figure 4 comprises a programmed memory 61 which is connected to the set of switches 62 for the variable source of e.m.f. of Figure 3. The memory contains each of the preferred switching states capable for each value of e.m.f. available from the source as shown at Table 3. The memory 61 is also connected to a timing and counting circuit comprising a clock circuit 63 and a pair of flip-flops 64 by which the mrmory is capable of periodically and sequentially switching to each of the alternative switching states for a set value of e.m.f. to equalise the utilisation of the cells in the source.

The control means also has a facility of preventing an excess current delivery from the source to the load. Such an excess delivery can not only damage the load but can reduce the life of the cells. An overload of excessive current can occur where the manual control is set to the highest e.m.f. value in a situation where the load which is an electric motor is stationary. In order to prevent excessive current the control means utilises a sensor such as a Hall effect device, (Hall probe) or shunt sensor (not shown) which senses the magnitude of the current. The sensor is connected via an input 65 to a comparator 66.

The comparator 66 is connected to the memory 61 via a low order priority input encoder 67 whereby on activation of the comparator the encoder will switch the set output for the source as contained in the memory to one of four levels which are below the output set by the manual control. For example, terminals A, B, C, and D of the comparator can be connected to terminals 4, 3, 2 and 1 respectively of the encoder. More than four levels can be provided if desired. The four levels to which the memory can be switched are inversely proportional to the degree of current excess applied to the load and on being switched to one of the levels the memory will be subsequently periodically switched through the other higher levels and then to the level set by the manual control as the sensed overload condition is overcome by increased rotational speed of the electric motor.

In use, if the electric motor is stationary and if the manual control is set to a maximum output the current flow to the motor will be excessive. This excessive current will be sensed by the sensor and will cause the comparator through the encoder to switch the memory to the lowest of the four output levels set by the comparator (e.g.; Output D to 1 in Figure 4). As a result the current flow to the motor is within suitable limits and the motor begins to rotate. After a period of time when the current level to the motor has obtained a satisfactory level the comparator then switches the memory to the next highest level (e.g.; Output C to 2), then to the next level (Output B to 3) then to the next level (Output A to 4) and finally permits the Memory 61 to return to the output set by the manual control. During this period, the electric motor has gathered rotational speed such that it can accept the maximum e.m.f. of the source without drawing an excessive current. If an overload does exist when the memory returns to the switching state set by the manual control the comparator through the encoder will switch the memory to the appropriate level depending upon the degree of overload.

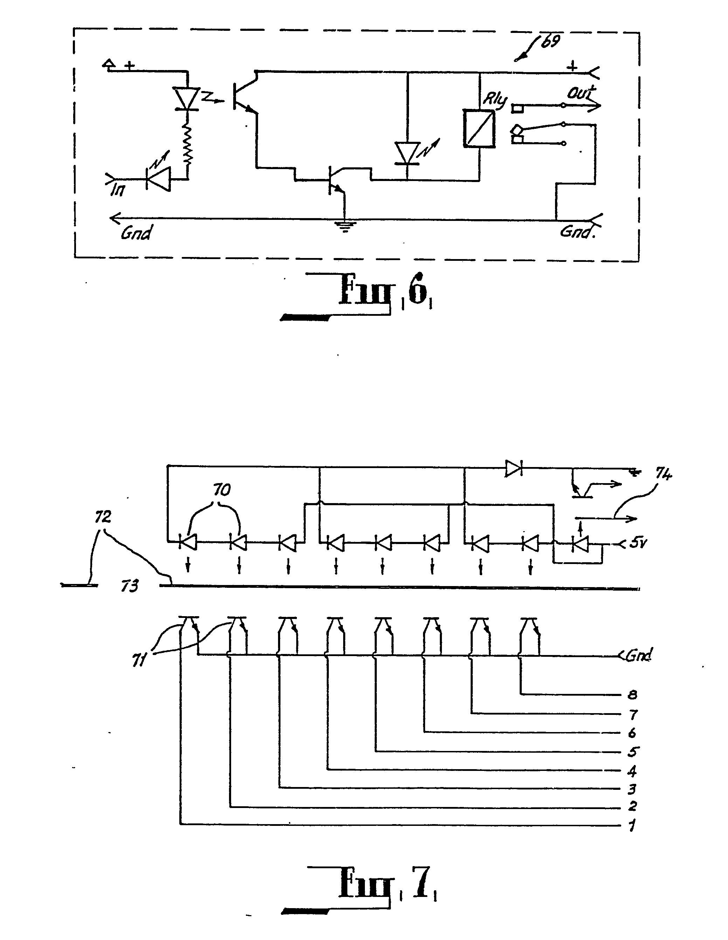

A specific example of a circuit which can be used in this control means of Figure 4 is shown at Figure 5. The components of Figure 4 bears the same reference numerals in Figure 5. Figure 6 is a specific example of an interface circuit 69 for connecting the output of the memory to respective contractor switches in the set of switches 62.

A specific example of the accelerator assembly is shown at Figure 7. The accelerator assembly comprises an array of light emitting diodes 70 located in opposed relation to a corresponding number of photo electric sensors 71. A movable shutter 72 is mounted between the diodes 70 and sensors 71. The shutter contains an aperture 73 which has suitable dimensions such that at any position (except the end position) between the diodes 70 and sensors 71, two diodes and their respective sensors are exposed. As a result, two signals from the accelerator are delivered to two adjacent inputs of the eight possible inputs of the encoder 67. The accelerator shutter 72 is associated with another shutter 74 movable between a light emitting diode and sensor in co-operation with the optional accelerator shutter 74 to activate the master switch (MC) of the circuit.

If high order encoding were to be used, there would be no need for the optional master switch shutter 74 provided the associated diode and sensor were associated with the accelerator shutter and positioned adjacent the lowest voltage step (i.e.; 1). Also the shutter window can be infinitely wide.

In the circuit of Figure 5 the encoder comprises an 8 line input to a 3 line output encoder 67 which is programmed to select the lowest of the input states received from the accelerator. As a result, the encoder translates the accepted input signal into the corresponding binary three digit signal for input into the memory 61. The memory stores the appropriate switching pattern for the battery circuit associated with the particular binary signal delivered from the encoder. The memory of the circuit of Figure 5 comprises a memory bank having 32 addresses each capable of storing an 8 digit binary number. On a particular switching arrangement being selected from the memory the memory then activates the appropriate switches of the battery circuit of Figure 3 through the interface circuits 69. An example of a suitable interface circuit is shown at Figure 6.

Referring now to table 3 which sets out the possible switching states available for all output levels of the battery circuit of the power supply circuit of Figure 3 it will be noticed that at an output level of 6 volts, 12 volts, 24 volts and 48 volts only one preferred switching state is required while at output levels of 18 volts and 36 volts two preferred switching states are required and at output levels of 30 volts and 42 volts, four preferred switching states are required. In order to equalise utilisation of each of the cells of the battery circuit it is necessary that where an alternative switching arrangement is available for a particular output voltage that each of those switching states be used. To effect such binary state of the memory which is associated with a selected accelerator level 1 to 8 is associated with four switching states for the battery circuit and each binary state is controlled by the clock circuit 63 and flip flops 64 to cyclically switch to each of the switching states associated with the particular binary state. In the case of accelerator inputs 1, 2, 4 and 8 each of the switching states are the same while in the case of accelerator input 3 and 6 there are two pairs of different switching states and in the case of accelerator input 5 and 7 there are four different switching states.

In addition, each switching state of each binary state includes a switching signal for the master switch of the battery circuit which is maintained ON in each switching state. Such an arrangement avoids the necessity for a separate switching circuit for the master switch.

The comparator 66 is associated with a sensor in the line between the battery circuit output and the load which is able to sense the presence of an excessive current. The comparator 66 has four outputs A, B, C and D which as previously mentioned can be associated with four accelerator input levels (i.e.: 4, 3, 2 and 1 respectively). On the sensor providing a signal to the comparator which indicates an overload situation the comparator will activate the appropriate output according to the degree of overload.

Where a minor overload exists one output (A) will be activated and where a large overload exists all outputs (A, B, C & D) will be activated.

The output signal from the comparator when it exists will override the output from the accelerator since the encoder has been programmed to accept the lowest of the input states received from either the accelerator or comparator. In addition, where a number of inputs are received from the comparator the encoder will select the lowest level input.

Where a large overload exists and the comparator has activated all of its outputs the encoder will provide a binary output corresponding to the lowest level available to the accelerator (i.e.; 1) despite the fact that the accelerator may be set to level 8. As the degree of overload diminishes the lower order of outputs of the comparator are sequentially switched off and on output D switching off the encoder will then switch to the signal set by the accelerator and will maintain that situation provided an overload condition does not occur.

By means of the control circuit of Figure 4 and the specific circuit of Figure 5 and 6, a variable e.m.f. output can be obtained from a set of batteries whereby the batteries are protected from overload and are subjected to the same degree of load to ensure substantially equal utilisation of the batteries. Because accelerator steps 1 to 7 utilise parallel interconnection between the batteries, the power output is maximised at each step.

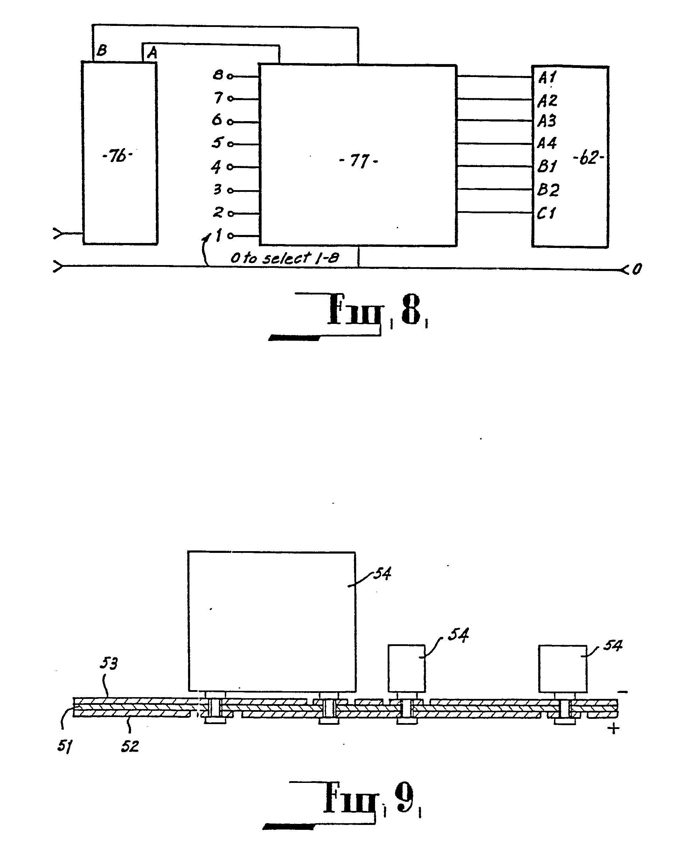

Another form of control means is shown at Figure 8 and utilises a microprocessor 77 which may have an auxiliary circuit (not shown) for periodically switching between the switching states for a particular voltage level. In addition the micro-processor is associated with a sensor such as a Hall effect device, (Hall probe) or shunt current sensor (not shown) and a comparator 76 which provides a first signal to the micro-processor via one line A when the current exceeds a predetermined limit and a second signal via a second line B when the current exceeds a higher predetermined limit.

A specific example of a circuit of the control means of Figure 8 utilises an INTEL 8085 programmable micro-processor unit. The circuit uses the interface circuit of Figure 6 between the output of the micro-processor and each of the switches of the set of switches 62. The microprocessor contains a memory of the same form as the memory 61 of Figure 4 where each binary state has up to four switching states and a cycling means is provided for regularly switching to each state. Each switching state includes in its switching array an ON condition for the master switch of the battery circuit. In addition, the micro-processor incorporates the encoding function of the encoder 67 of Figure 4 to translate the input information from the accelerator circuit into a binary information for activation of the memory. The comparator 76 takes the same form and use as that shown at Figure 5 but can alternatively provide two flag signals for recognition by the program of the micro-processor. The first flag indicates that the magnitude of the current to the load has reached a predetermined range (current window) and that the voltage output to the load is not to be increased while the current remains within that range not withstanding an input from the accelerator for a higher lever than that being supplied.

The second flag is raised when the load current (current window) exceeds the predetermined range in which case the comparator function of the comparator 66 of Figure 5 is activated whereby the output voltage is switched to a lower level of any one of states 1 to 7 depending on the degree of overload.

If desired, the magnitude of the upper and lower levels of the predetermined range can be jointly varied in accordance with the selected output of the accelerator.

The micro-processor referred to above incorporates a timing circuit whereby the switching action between voltage outputs can be varied according to the desired operating parameters for the load. For instance where it is required to switch from one voltage to a higher voltage there should be some delay between each trip to enable the load to accommodate the increase in voltage as a gradual increase rather than as an instantaneous increase. This can be effected by programming a preset time delay between each upward step in voltage output to the load, into the micro-processor.

However, when it is desired to decrease the voltage output, it is desirable in the case of electric driven vehicles to manually decrease the voltage immediately it is requested. To accommodate this function the micro-processor is programmed to provide the minimum delay when a decrease in voltage is signalled by the accelerator. In the case of an overload being sensed the micro-processor is programmed to sequentially step down to a lower level of e.m.f. and provide some time delay at each level to permit evaluation of whether an overload still exists.

It is also an action of the micro-processor that the memory contains an ON switching condition for the master switch for all of the switching states stored in the memory. In addition, on the accelerator moving to the position for a zero voltage output the micro-processor will momentarily switch the battery circuit to the minimum voltage output (i.e.; 1) before opening the master switch. A minimum voltage (i.e.; 1) is also selected and held for starting.

In the situation where the power supply is connected to an electrical motor which is also capable of producing its own e.m.f., the control means of Figures 4 and 7 may also be programmed such that the voltage supplied to the motor is enough to maintain a state of equilibrium. In the event that the voltage applied to the motor is less than that produced by the motor the voltage supply will be disconnected from the motor in order that the motor may freewheel. Alternatively a subsidiary circuit may be connected between the motor and the power supply in order that a charge voltage is applied to each of the cells within the circuit to regenerate the charge therein. This can be applied when the accelerator is in its 0 position and the resultant change is alternately applied to one half of the set of batteries in series and then to the other half with switch C1 being the dividing line.

If preferred, each battery may incorporate means for sensing the state of charge of each battery to provide the operator with an indication of the amount of charge ("fuel") available. In addition, the micro-processor can have means for scanning the output of each sensor to assess the degree of utilisation made of each battery. The micro-processor may also include means for varying the switching time for each battery through the clock circuit where it is found one or more batteries have been over utilised in relation to the other batteries.

The form of control means shown at Figure 10 utilises a servo operated accelerator to effect current control. The control comprises a manually operated potentiometer 81 which is operated by the operator connected to a window comparator 82 to set the desired current level in the load. A (Hall probe) sensor 83 which senses the current in the load is connected to the comparator.

The comparator is connected to a bridge network which controls the servo motor 84 for effecting movement of the accelerator control. The output from the comparator from terminal 2 is effected if the desired level set by the manual control is greater than that which exists in the load as sensed and thus the servo motor is activated to effect an increase. If the manual control is set at a lower level than that which exists in the load output 14 is activated to effectively produce a corresponding activation of the accelerator.

A second potentiometer 85 is incorporated to provide for a variable degree of free movement by the manual control without activation of the servo motor.

In the event of an overload being sensed in the load the comparator will activate output 14 to effect a decrease in the e.m.f. of the power supply. According to this form of control means the possibility of overload is reduced due to the constant simultaneous monitoring of the load current and settings of the manual control.

The form of control means of Figure 11 comprises a current limited voltage control and provides a digital counter register to select typically 1 to 8 voltage setting from the Electrical Power Supply of Figure 3. In the case of a vehicle the 4 position switch would operate as an accelerator. WIth the foot removed the switch would return to reset zero. Position 1 causes the counter to decrement (if already at zero and nothing will happen). Position 2 holds the setting, (if already on zero nothing will happen). Position 3 increments the counter at a rate which can be predetermined.

In this particular circuit the clock can be varied to provide pulses at intervals of 10 to 1,000 milliseconds, 100 milliseconds is a typical satisfactory figure for this circuit. The counter will increment from zero to 8 in this example providing that a predetermined current limit is not exceeded. Should this limit be reached the count will be inhibited and/or latched. If no limit is reached the counter can go to maximum 8. Should an unexpected overload occur whilst driving on particular setting the signal 'go no faster' will be received.

Should a higher predetermined current limit be reached the signal 'go slower' will cause the counter to count down, even if the driver still has his foot depressed and selecting the count up position 3 on the accelerator switch. This is achieved by the logic switching which occurs within the circuit marked "up/down gates (down has priority)".

It should be appreciated that the invention need not be limited to the particular scope of the embodiment described above and in particular any reference which is made to a cell may be taken to include the utilisation of a battery of cells of any type. Switches can be used in place of diodes and solid state switching devices can be used in place of the switches. In addition, the source of e.m.f. may comprise any source of e.m.f. and need not be limited to batteries or cells.

## Claims

1. An electrical power supply having an output of variable E.M.F., said power supply comprising at least two pairs of sources of E.M.F. (14), the sources of each pair being interconnected in parallel, each portion of the parallel circuit comprising the source (11) being connected in series with a diode means (13), a switch (A) interconnecting the junctions between the source and the diode means of each portion of the parallel circuit and wherein the pairs are connected in parallel with each other and each portion of the parallel circuit comprises a diode means (15) connected in series with each pair, the opposite poles of each pair being interconnected by a second switch (B), the switches (A, B) being operated by a control means sensitive to the requirements of the load connected to the power supply and being adapted to operate said switches such that on said first or second switches being open said sources or pairs of courses respectively are connected in parallel and on said first or second switches being closed said sources or pairs of sources respectively are connected in series characterised in that said control means comprises a memory (61) having a memory state corresponding to each output level of E.M.F. of said power supply wherein at least one of said memory states corresponds to a plurality of switching arrangement for said switches, each of said switching arrangements being able to produce a substantially equal E.M.F. said control means further comprising a clock circuit (63) connected to said memory for cyclically switching each switching arrangement with a memory state.

2. An electrical power supply as claimed in Claim 1, characterised in that the switches and diode means are mounted to a base comprising a laminate sheet formed of a central sheet (51) of electrical insulating material and having bonded to each face a sheet (52, 53) of heavy duty electrically conductive material wherein each sheet of electrically conductive material is inherently load supportive, and each electrical conductive sheet is formed with a discontinuous pattern which exposes the central sheet; said switches and diode means being fixed to said base such that one of said conductive sheets is connected to one of the terminals of said components and the other is connected to the other terminal of the components and wherein the nature of the pattern on each sheet and the interconnection between the terminals of the components corresponds to the desired electrical interconnection between said diodes, switches and sources for said electrical power supply; the mounting of said switches and diodes also providing the electrical connection to the base.

3. An electrical power supply as claimed in claim 2, characterised in that each said sheet of electrically conductive material has a polarity different from the other and wherein the mountings of terminals for said components engage both sheets of electrically conductive material, the discontinuous pattern in the one sheet which has the opposite polarity to that of the terminal being such as to isolate the portion of the one sheet which is in contact with the mounting of the terminal from the remaining portion of said one sheet.

4. An electrical power supply as claimed in Claim 2 or 3, characterised in that the sheets of electrically conductive material also serve as heat sinks for the components.

5. An electrical power supply as claimed in Claim 2, 3 or 4, characterised in that said base also supports macro-electronic circuit components associated with said switches.

6. An electrical power supply as claimed in any one of Claims 2 to 5, characterised in that the base further comprises a second layer of electrically insulating material bonded to one of said electrically conductive sheets, said second layer supporting a thin layer of electrically conductive material supporting microelectronic components associated with said control means.

7. An electrical power supply as claimed in any one of Claims 2 to 6, characterised in that the components are mounted to the base by means of an array of holes through said base the set of holes for each component being appropriately spaced and the holes for terminals of the components of one polarity having a diameter different from the diameter of holes for the terminals of the other polarity.

8. An electrical power supply as claimed in Claim 1, characterised in that the control means is capable of overriding a manual control for said E.M.F. and said control means comprising; a sensor to sense the magnitude of current from said source to said load; and a switching means connected to said sensor and to said load, wherein on said current exceeding a predetermined value, the controller switch will lower the E.M.F., of said source to a level which will produce a current below said predetermined level, said switching means subsequently permitting said E.M.F., to increase to that set by the resultant manual control provided the current does not exceed said predetermined value.

9. An electrical power supply as claimed in Claim 1 or 8, characterised in that said control means also comprises an encoder (67) and a comparator (66); said memory (61) having a memory state corresponding to each output level of E.M.F. of said power supply, the output of said memory being connected to said switches, said encoder (67) being connected between said manual control and said memory (61) to translate the signal from said manual control into a form suitable for input into said memory, said comparator (66) having an output connected to said encoder (67) common with input signal stages from said manual control, said comparator being connected with a sensor associated with said load, said sensor being capable of sensing the magnitude of current in said load, wherein on said comparator receiving a signal from said sensor which indicates excessive current in the load an output signal is passed to said encoder to switch said memory to a memory state of lower E.M.F. than that signalled by the manual control.

10. An electrical power supply as claimed in Claim 9, characterised in that said control means comprises a programmed microprocessor (77), incorporating the functions of said memory, encoder, comparator and clock circuit.

11. An electrical power supply as claimed in Claim 9 or 10, characterised in that said comparator has means to; prevent an increase of E.M.F. output being signalled to said memory by said manual control through said encoder when said current in said load is within a predetermined range; to reduce the E.M.F. output when said current is in excess of said predetermined range; and to permit the manual control to increase said E.M.F. output when said current is below said predetermined range.

12. An electrical power supply as claimed in Claim 10, characterised in that said microprocessor provides for an increase in E.M.F. output being effected by a sequential stepping through each level of E.M.F. output of said power supply with a predetermined minimum time delay between each level.

13. An electrical power supply as claimed in Claim 12, characterised in that said microprocessor provides for an immediate decrease in E.M.F. output on the appropriate signal being received by the memory through the manual control.

14. An electrical power supply as claimed in Claim 12 or 13, characterised in that said microprocessor provides for sequential reduction in E.M.F. on an overload being sensed in the load with a predetermined time delay between each reduction step.

15. An electrical power supply as claimed in Claim 14, characterised in that on activation of said manual control said microprocessor will maintain a switching state having a minimum output when connecting the power supply to the load.

16. An electrical power supply as claimed in Claim 10, characterised in that on said E.M.F. output being reduced to zero by said manual control, said microprocessor initially provides an output to activate a switching state having the minimum E.M.F. output before disconnecting the power supply from said load.

17. An electrical power supply as claimed in Claim 11, characterised in that each source comprises a battery having a state of charge sensor therein and said microprocessor is programmed to measure the output of each sensor and to vary the timing of the clock circuit to maximise utilisation of each source.

18. An electrical power supply as claimed in Claim 10, characterised in that said load is capable of producing its own E.M.F. and said sources comprise rechargeable batteries and said microprocessor is programmed to introduce said E.M.F.

to said sources on said E.M.F. being greater than that supplied by the power supply.

19. An electrically powered vehicle having an electrical power supply of the form claimed in any one of Claims 1 to 18.

**Patentansprüche**

1. Versorgungsanlage mit veränderlicher Ausgangsleistung, die wenigstens zwei Paare von EMK-Quellen (14) aufweist, wobei die Quellen jedes Paares parallel zueinander geschaltet sind, wobei in jedem Bereich des Parallelkreises die Quelle (11) in Reihe zu einer Diodeneinrichtung (13) geschaltet ist, wobei ein Schalter A die Verbindungspunkte zwischen der Quelle und der Diodeneinrichtung jedes Bereiches des Parallelkreises miteinander verbindet, wobei die Paare parallel zueinander geschaltet sind und jeder Bereich des Parallelkreises eine in Reihe zu jedem Paar geschaltete Diodeneinrichtung (15) umfasst, wobei die entgegengesetzten Pole jedes Paares durch einen zweiten Schalter (B) miteinander verbunden sind, wobei die Schalter (A, B) durch eine Steuereinrichtung betätigt werden, die auf die Anforderungen der mit der Versorgungsanlage verbundenen Last anspricht und die die Schalter derart betätigen kann, daß bei geöffneten ersten oder zweiten Schalter die Quellen oder Quellenpaare jeweils parallel miteinander verbunden sind und bei geschlossenem ersten oder zweiten Schalter die Quellen oder Quellenpaare jeweils in Reihe miteinander geschaltet sind, dadurch gekennzeichnet, daß die Steuereinrichtung einen Speicher (61) mit einem Speicherzustand aufweist, der jedem Ausgangspegel der EMK der Versorgungsanlage entspricht, daß wenigstens einer der Speicherzustände einer Mehrzahl von Schaltanordnungen der Schalter entspricht, daß jede der Schaltanordnungen eine im wesentlichen gleiche EMK erzeugen kann und daß die Steuereinrichtung außerdem einen Taktkreis (63) aufweist, der mit dem Speicher verbunden ist, um zyklisch jede Schaltanordnung in einen Speicherzustand zu schalten.

2. Elektrische Versorgungsanlage nach Anspruch 1, dadurch gekennzeichnet, daß die Schalter- und Diodeneinrichtungen auf einer Basisplatte montiert sind, die ein geschichtetes Blatt aufweist, das aus einer mittleren Schicht (51) aus einem elektrisch isolierenden Material, bei der an jeder Seite eine Schicht (52, 53) aus einem hochbelastbaren elektrisch leitenden Material befestigt ist, daß jede Schicht des elektrisch leitenden Materials ein inherenter Lastträger ist, daß jede elektrisch leitende Schicht ein diskontinuierliches Muster aufweist, das die mittlere Schicht freilegt, daß die Schalter- und Diodeneinrichtungen derart an der Basisplatte befestigt sind, daß eine der leitenden Schichten mit einem der Anschlüsse der Komponenten und die andere der leitenden Schichten mit dem anderen Anschluß der Komponenten verbunden sind, daß die Natur des Musters jeder Schicht und die Zwischenverbindungen zwischen den Anschlüssen der Komponenten der gewünschten elektrischen Verbindung zwischen den Dioden, Schaltern und Quellen für die elektrische Versorgungsanlage entspricht, und daß die Befestigung der Schalter- und Diodeneinrichtung auch die elektrische Verbindung zur Basisplatte bewirkt.

3. Elektrische Versorgungsanlage nach Anspruch 2, dadurch gekennzeichnet, daß jede der Schichten des elektrisch leitenden Materials eine andere Polarität aufweist und daß die Befestigungen der Anschlüsse für die Komponenten an beiden Schichten des elektrisch leitenden Materials angreifen, daß das diskontinuierliche Muster in der einen Schicht, die die entgegengesetzte Polarität wie die Polarität des Anschlusses aufweist, derart beschaffen ist, daß der Bereich der einen Schicht isoliert wird, der die Befestigung des Anschlusses vom Restbereich der einen Schicht berührt.

4. Elektrische Versorgungsanlage nach Anspruch 2 oder 3, dadurch gekennzeichnet, daß die Schichten aus dem elektrisch leitenden Material auch als Kühlkörper für die Komponenten dienen.

5. Elektrische Versorgungsanlage nach Anspruch 2, 3 oder 4, dadurch gekennzeichnet, daß die Basisplatte auch den Schaltern zugeordnete makroelektronische Kreiskomponenten trägt.

6. Elektrische Versorgungsanlage nach einem der Ansprüche 2 bis 5, dadurch gekennzeichnet, daß die Basisplatte außerdem eine zweite Schicht aus einem elektrisch isolierenden Material umfaßt, die mit einer der elektrisch leitenden Schichten verbunden ist, daß die zweite Schicht eine dünne Schicht aus einem elektrisch leitenden Material trägt, die der Steuereinrichtung zugeordnete mikroelektronische Komponenten trägt.

7. Elektrische Versorgungsanlage nach einem der Ansprüche 2 bis 6, dadurch gekennzeichnet, daß die Komponenten mit der Basisplatte durch eine Anordnung von durch die Basisplatte verlaufenden Löchern verbunden ist, daß der Lochsatz für jede Komponente in geeigneter Weise voneinander beabstandet ist und daß die Löcher für die Anschlüsse der Komponenten einer Polarität einen Durchmesser aufweisen, der sich von dem Durchmesser der Löcher für die Anschlüsse der anderen Polarität unterscheidet.

8. Elektrische Versorgungsanlage nach Anspruch 1, dadurch gekennzeichnet, daß die Steuereinrichtung eine manuelle Steuerung für die EMK übersteuern bzw. überdecken kann, daß die Steuereinrichtung einen Sensor zur Ermittlung der Größe des von der Quelle zur Last fließenden Stromes und eine Schalteinrichtung aufweist, die mit dem Sensor und der Last verbunden ist, daß der Regelschalter dann, wenn der Strom einen vorbestimmten Wert überschreitet, die EMK der Quelle auf einen Pegel verringert, der einen Strom unterhalb des vorbestimmten Pegels erzeugt, und daß die Schalteinrichtung nachfolgend zulässt, daß sich die EMK auf die Einstellung der resultierenden manuellen Steuerung vergrößert, vorausgesetzt, daß der Strom den vorbestimmten Wert nicht überschreitet.

9. Elektrische Versorgungsanlage nach Anspruch 1 oder 8, dadurch gekennzeichnet, daß die Steuereinrichtung auch einen Codierer (67) und einen Vergleicher (66) aufweist, daß der Speicher (61) einen Speicherzustand aufweist, der jedem Ausgangspegel der EMK der Versorgungsanlage entspricht, daß der Ausgang des Speichers mit den Schaltern verbunden ist, daß der Codierer (67) zwischen die manuelle Steuerung und den Speicher (61) geschaltet ist, um das Signal von der manuellen Steuerung in eine Form umzuwandeln, die für die Eingabe in den Speicher geeignet ist, daß der Vergleicher (66) einen mit dem Codierer (67) verbundenen Ausgangaufweist, der mit Eingangssignalstufen von der manuellen Steuerung gemeinsam ist, daß der Vergleicher mit einem der Last zugeordneten Sensor verbunden ist, daß der Sensor die Größe des in der Last fließenden Stromes ermitteln kann, und daß dann, wenn der Vergleicher ein Signal von dem Sensor empfängt, das einen übermäßig großen Strom in der Last anzeigt, ein Ausgangssignal zum Codierer gegeben wird, um den Speicher in einen Speicherzustand einer EMK umzuschalten, die niedriger ist als die von der manuellen Steuerung angezeigte EMK.

10. Elektrische Versorgungsanlage nach Anspruch 9, dadurch gekennzeichnet, daß die Steuereinrichtung einen programmierten Mikroprozessor (77) aufweist, der die Funktionen des Speichers, Codierers, Vergleichers und Taktkreises umfasst.

11. Elektrische Versorgungsanlage nach Anspruch 9 oder 10, dadurch gekennzeichnet, daß die Vergleicher eine Einrichtung aufweist, die eine Zunahme des EMK-Ausganges verhindert, der dem Speicher durch die manuelle Steuerung über den Codierer angezeigt wird, wenn der Strom in der Last in einem vorbestimmten Bereich liegt, den EMK-Ausgang verringert, wenn der Strom über den vorbestimmten Bereich hinausgeht, und die manuelle Steuerung zuläßt, um den EMK-Ausgang zu vergrößern, wenn der Strom unterhalb des vorbestimmten Bereiches liegt.

12. Elektrische Versorgungsanlage nach Anspruch 10, dadurch gekennzeichnet, daß der Mikroprozessor eine Zunahme des EMK-Ausganges durch ein sequentielles Durchschreiten jedes Pegels des EMK-Ausgangs der Versorgungsanlage mit einer vorbestimmten minimalen Zeitverzögerung zwischen jedem Pegel bewirkt.

13. Elektrische Versorgungsanlage nach Anspruch 12, dadurch gekennzeichnet, daß der Mikroprozessor eine sofortige Abnahme des EMK-Ausganges bewirkt, wenn ein geeignetes Signal vom Speicher über die manuelle Steuerung empfangen wird.

14. Elektrische Versorgungsanlage nach Anspruch 12 oder 13, dadurch gekennzeichnet, daß der Mikroprozessor eine sequentielle Verringerung der EMK dann, wenn eine Überbelastung in der Last ermittelt wird, mit einer vorbestimmten Zeitverzögerung zwischen jedem Reduktionsschritt bewirkt.

15. Elektrische Versorgungsanlage nach Anspruch 14, dadurch gekennzeichnet, daß der Mikroprozessor bei der Aktivierung der manuellen Steuerung einen Schaltzustand einer minimalen Ausgangsleistung aufrechterhält, wenn er die Versorgungsanlage mit der Last verbindet.

16. Elektrische Versorgungsanlage nach Anspruch 10, dadurch gekennzeichnet, daß dann, wenn der EMK-Ausgangdurch die manuelle Steuerung auf Null verringert wird, der Mikroprozessor anfänglich ein Ausgangssignal zur Aktivierung eines Schaltzustandes erzeugt, der den minimalen EMK-Ausgang aufweist, bevor er die Versorgungsanlage von der Last trennt.

17. Elektrische Versorgungsanlage nach Anspruch 11, dadurch gekennzeichnet, daß jede Quelle eine Batterie aufweist, in der ein Sensor für den Ladungszustand vorgesehen ist, und daß der Mikroprozessor derart programmiert ist, daß er das Ausgangssignal jedes Sensors misst, um die Zeitsteuerung des Taktkreises zu verändern, um die Verwendung jeder Quelle zu maximieren.

18. Elektrische Versorgungsanlage nach Anspruch 10, dadurch gekennzeichnet, daß die Last ihre eigene EMK erzeugen kann, und daß die Quellen wiederladbare Batterien enthalten und daß der Mikroprozessor derart programmiert ist, daß er die EMK den Quellen zuführt, wenn die EMK größer ist als die von der Versorgungsanlage gelieferte EMK.

19. Mit einer elektrischen Leistung versorgtes Fahrzeug, das eine elektrische Versorgungsanlage der in einem der Ansprüche 1 bis 18 beanspruchten Form aufweist.

**Revendications**

1. Un dispositif d'alimentation électrique présentant une sortie de force électromotrice variable, ledit dispositif d'alimentation comportant au moins deux paires de sources de force électromotrice (14), les sources de chaque paire étant reliées en parallèle, chaque partie du circuit en parallèle qui comporte la source (11) étant reliée en série avec des moyens à diode (13), un interrupteur (A) interconnectant les jonctions entre la source et les moyens à diode de chaque partie du circuit parallèle et les paires étant montées en parallèle l'une par rapport à l'autre, et chaque partie du circuit parallèle comportant des moyens à diode (15) montés en série avec chaque paire, les pôles opposés de chaque paire étant interconnectés par un second interrupteur (B), les interrupteurs (A, B) étant actionnés par des moyens de commande sensibles aux besoins de la charge reliée au dispositif d'alimentation et agencés pour actionner lesdits interrupteurs de manière que, lorsque lesdits premiers ou second interrupteurs sont ouverts, lesdites sources ou paires de sources respectivement soient connectées en parallèle et que, lorsque lesdits premiers ou second interrupteurs sont fermés, lesdites sources ou paires de sources respectivement soient reliées en série, caractérisé en ce que lesdits moyens de commande comportent une mémoire (61) présentant un état de mémoire qui correspond à chaque niveau de sortie de force électromotrice dudit dispositif d'alimentation, au moins l'un desdits états de mémoire correspondant à une pluralité d'agencements de commutation pour lesdits interrupteurs, chacun desdits agencements de commutation étant capable de produire une force électromotrice sensiblement égale, lesdits moyens de commande comportant en outre un circuit d'horloge (63) relié à ladite mémoire pour commuter de façon cyclique chaque agencement de commutation dans un état de mémoire.

2. Un dispositif d'alimentation électrique selon la revendication 1, caractérisé en ce que les interrupteurs et les moyens à diode sont montés sur une base comportant une feuille lamellaire formée d'une feuille centrale (51) en matière électriquement isolante et portant, liée à chacune de ses faces, une feuille (52, 53) de matière électriquement conductrice à utilisation élevée, chaque feuille de matière électriquement conductrice étant de façon inhérente un support de charge et chaque feuille électriquement conductrice étant formée d'un motif discontinu qui expose la feuille centrale; lesdits interrupteurs et moyens à diode étant fixés à ladite base de telle manière que l'une desdites feuilles conductrices soit reliée à l'une des bornes desdits composants tandis que l'autre est reliée à l'autre borne des composants et la nature du motif sur chaque feuille et l'interconnexion entre les bornes des composants correspondant à l'interconnexion électrique désirée entre lesdits diodes, interrupteurs et sources pour ledit dispositif d'alimentation électrique; le montage desdits interrupteurs et diodes fournissant également la connexion électrique à la base.

3. Un dispositif d'alimentation électrique selon la revendication 2, caractérisé en ce que chacune desdites feuilles de matière électriquement conductrice présente une polarité différente de l'autre et les moyens de montage des bornes pour lesdits composants coopérant avec les deux feuilles de matière électriquement conductrice, le motif discontinu dans la première feuille, qui présente une polarité opposée à celle de la borne, étant agencé pour isoler la partie de la première feuille qui est en contact avec les moyens de montage de la borne à partir de la partie restante de ladite première feuille.

4. Un dispositif d'alimentation électrique selon la revendication 2 ou 3, caractérisé en ce que les feuilles de matière électriquement conductrice servent également d'absorbeurs thermiques pour les composants.

5. Un dispositif d'alimentation électrique selon la revendication 2, 3 ou 4, caractérisé en ce que ladite base supporte également des composants macroélectroniques de circuit associés auxdits interrupteurs.

6. Un dispositif d'alimentation électrique selon l'une quelconque des revendications 2 à 5, caractérisé en ce que la base comporte en outre une seconde couche de matière électriquement isolante liée à la première desdites feuilles électriquement conductrices, ladite seconde couche supportant une fine couche de matière électriquement conductrice qui supporte des composants microélectroniques associés auxdits moyens de commande.

7. Un dispositif d'alimentation électrique selon l'une quelconque des revendications 2 à 6, caractérisé en ce que les constituants sont montés sur la base par l'intermédiaire d'une rangée de trous pratiqués dans la base, les trous d'un ensemble pour chaque composant étant espacés de façon appropriée et les trous pour les bornes des composants d'une première polarité présentant un diamètre différent du diamètre des trous pour les bornes de l'autre polarité.

8. Un dispositif d'alimentation électrique selon la revendication 1, caractérisé en ce que les moyens de commande sont capables d'empêcher une commande manuelle pour ladite force électromotrice, lesdits moyens de commande comportant: un détecteur pour détecter l'amplitude du courant de ladite source à ladite charge; et des moyens de commutation reliés audit détecteur et à ladite charge, l'ensemble étant tel que, lorsque le courant dépasse une valeur prédéterminée, l'interrupteur de commande abaisse la force électromotrice de ladite source à un niveau qui produit un courant inférieur audit niveau prédéterminé, lesdits moyens de commutation permettant ensuite à ladite force électromotrice d'augmenter pour atteindre une valeur établie par la commande manuelle résultante, pourvu que le courant ne dépasse pas ladite valeur prédéterminée.

9. Un dispositif d'alimentation électrique selon la revendication 1 ou 8, caractérisé en ce que lesdits moyens de commande comportent également un codeur (67) et un comparateur (66), ladite mémoire (61) présentant un état de mémoire qui correspond à chaque niveau de sortie de force électromotrice dudit dispositif d'alimentation, la sortie de ladite mémoire étant reliée auxdits interrupteurs, ledit codeur (67) étant monté entre lesdits moyens à commande manuelle et ladite mémoire (61) pour transformer le signal provenant desdits moyens de commande manuelle sous une forme appropriée pour son entrée dans ladite mémoire, ledit comparateur (66) présentant une sortie qui est reliée audit codeur (67) en commun avec les étages de signal d'entrée provenant desdits moyens de commande manuelle, ledit comparateur étant relié à un détecteur associé à ladite charge, ledit détecteur étant capable de détecter l'amplitude du courant dans ladite charge, l'ensemble étant tel que, quand ledit comparateur reçoit un signal provenant dudit détecteur qui indique un courant excessif dans la charge, un signal de sortie soit délivré audit codeur pour commuter ladite mémoire sur un état de mémoire de force électromotrice inférieure à celle qui est signalée par les moyens de commande manuelle.

10. Un dispositif d'alimentation électrique selon la revendication 9, caractérisé en ce que lesdits moyens de commande comportent un microprocesseur programmé (77) remplissant les fonctions desdits mémoire, codeur, comparateur, et circuit d'horloge.

11. Un dispositif d'alimentation électrique selon la revendication 9 ou 10, caractérisé en ce que ledit comparateur comporte des moyens pour: empêcher qu'une augmentation de force électromotrice de sortie soit signalée à ladite mémoire par lesdits moyens à commande manuelle à travers ledit codeur quand ledit courant dans ladite charge est situé dans une gamme prédéterminée; réduire la force électromotrice de sortie quand ledit courant dépasse ladite gamme prédéterminée; et permettre aux moyens à commande manuelle d'augmenter ladite force électromotrice de sortie quand ledit courant est en-deçà de ladite gamme prédéterminée.

12. Un dispositif d'alimentation électrique selon la revendication 10, caractérisé en ce que ledit microprocesseur est agencé pour qu'une augmentation de la force électromotrice de sortie soit effectuée de manière séquentielle et graduelle en passant par chaque niveau de force électromotrice de sortie dudit dispositif d'alimentation avec un retard minimum prédéterminé entre chaque niveau.

13. Un dispositif d'alimentation électrique selon la revendication 12, caractérisé en ce que ledit microprocesseur est agencé pour qu'une diminution immédiate de la force électromotrice de sortie sur le signal approprié soit reçue par la mémoire à travers les moyens à commande manuelle.

14. Un dispositif d'alimentation électrique selon la revendication 12 ou 13, caractérisé en ce que ledit microprocesseur est agencé pour qu'une réduction séquentielle de la force électromotrice en cas de surcharge soit détectée dans la charge avec un retard prédéterminé entre chaque niveau de réduction.

15. Un dispositif d'alimentation électrique selon la revendication 14, caractérisé en ce que, lorsque les moyens à commande manuelle sont activés, ledit microprocesseur maintient un état de commutation qui permet une sortie minimale quand le dispositif d'alimentation est reliée à la charge.

16. Un dispositif d'alimentation électrique selon la revendication 10, caractérisé en ce que, lorsque la valeur de la force électromotrice de sortie est réduite à zéro par lesdits moyens à commande manuelle, ledit microprocesseur délivre initialement un signal de sortie pour activer un état de commutation fournissant une force électromotrice de sortie minimale avant que le dispositif d'alimentation soit déconnecté par rapport à ladite charge.

17. Un dispositif d'alimentation électrique selon la revendication 11, caractérisé en ce que chaque source comporte une batterie qui présente un détecteur d'état de charge incorporé, et ledit microprocesseur étant programmé pour mesurer la sortie de chaque détecteur et pour faire varier le rythme du circuit d'horloge de manière à maximaliser l'utilisation de chaque source.

18. Un dispositif d'alimentation électrique selon la revendication 10, caractérisé en ce que ladite charge est capable de produire sa propre force électromotrice, lesdites sources comportent des batteries rechargeables et ledit microprocesseur est programmé pour introduire ladite force électromotrice dans lesdites sources quand ladite force électromotrice est supérieure à celle qui est délivrée par le dispositif d'alimentation.

19. Un véhicule à actionnement électrique comportant un dispositif d'alimentation électrique du type revendiqué dans l'une quelconque des revendications 1 à 18.

Fig. 1

Fig. 2

Fig. 3.

Fig. 4.

$$\underline{\text{F}_{\text{I}}\text{u}_{\text{I}}5_{\text{I}}}$$

**Fig. 6**

**Fig. 7**

$$\mathbf{Fig.\ 8}$$

$$\mathbf{Fig.\ 9}$$

Fig. 10.

0-8 Accelerator switch.

Fig. 11.